# EUROPEAN PATENT APPLICATION

(11) **EP 3 588 186 A1**
(43) Date of publication of application: **01.01.2020**
(21) Application number: 19171736.2
(22) Date of filing: 30.04.2019
(51) Int. Cl.: G03B 21/00, F21S 41/00, G03B 21/20

(54) **ILLUMINATION SYSTEM AND PROJECTION APPARATUS**

(30) Priority: 29.06.2018 CN 201821018383 U
(71) Applicant: Coretronic Corporation, Hsin-Chu 300 (TW)
(72) Inventor: CHEN, CHUN-LI, 300 Hsin-Chu (TW); LU, CHUN-HSIN, 300 Hsin-Chu (TW); JAO, KUN-LIANG, 300 Hsin-Chu (TW)
(74) Representative: Ter Meer Steinmeister & Partner

(57) **Abstract**

An illumination system including an exciting light source module, a beam splitting and combining module, a wavelength conversion component and a light filtering component is provided. The exciting light source module is adapted to emit an exciting beam. The beam splitting and combining module is disposed on a transmission path of the exciting beam. The wavelength conversion component has a first optical region and a second optical region, and the first optical region and the second optical region are sequentially cut into the transmission path of the exciting beam transmitted by the beam splitting and combining module. The light filtering component is combined with the wavelength conversion component by a common central axis, so that the wavelength conversion component and the light filtering component are adapted to rotate coaxially. The illumination system has a simpler structure and lower cost. A projection apparatus is also provided.

## Description

This application claims priority of China appl. serial no. 201821018383.5, filed on June 29, 2018.

### BACKGROUND OF THE INVENTION

### 1. Field of the Invention

The disclosure relates to an optical system and an optical apparatus, and particularly relates to an illumination system and a projection apparatus using the same.

### 2. Description of Related Art

With the development of optical technology, solid-state lighting techniques such as light emitting diode (LED) and laser diode (LD) have been widely applied to the light sources of projectors. Herein the laser diode, compared to the light emitting diode, may provide light beams of higher intensity to serve as the light source of the projector.

The structure of a laser projector may include a wavelength conversion wheel and a filtering wheel. The wavelength conversion wheel may have a plurality of wavelength conversion regions and a non-wavelength conversion region. When a laser beam from the light source irradiates the plurality of wavelength conversion regions, the laser beam may be converted into a plurality of converted beams having different colors in different time sequences, respectively. When the laser beam irradiates the non-wavelength conversion region, the non-wavelength conversion region outputs (reflects) the laser beam. Finally, the plurality of converted beams and the laser beam are respectively directed to the filtering wheel, and the required color lights are respectively filtered out by the corresponding light filtering regions.

However, in the existent structure, for the purpose of redirecting the laser beam to the filtering wheel, it is required to dispose a large number of optical components (mirrors, lenses, etc.) and the corresponding optical paths, thereby resulting in the overall increase of volume and cost. Besides, a synchronization design is required for the respective rotating mechanisms of the wavelength conversion wheel and the filtering wheel in order to avoid differences in image color. Consequently, it is not possible to effectively reduce manufacturing processes and cost.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention were acknowledged by a person of ordinary skill in the art.

### SUMMARY OF THE INVENTION

The disclosure provides an illumination system and a projection apparatus that have simpler structures and lower cost.

Other objectives and advantages of the disclosure may be further understood by referring to the technical features broadly embodied and described as follows.

The object is solved by the features of the independent claims. Preferred embodiments are given in the dependent claims.

In order to achieve one, a part of, or all of the aforementioned objectives or other objectives, an embodiment of the disclosure provides an illumination system that includes an exciting light source module, a beam splitting and combining module, a wavelength conversion component and a light filtering component. The exciting light source module is adapted to emit an exciting beam. The beam splitting and combining module is disposed on a transmission path of the exciting beam. The wavelength conversion component has a first optical region and a second optical region, and the first optical region and the second optical region are sequentially cut into the transmission path of the exciting beam transmitted by the beam splitting and combining module. The light filtering component is combined with the wavelength conversion component by a common central axis, so that the wavelength conversion component and the light filtering component are adapted to rotate coaxially.

In some embodiments, the wavelength conversion component may comprise a pillar, and the first optical region and the second optical region may be disposed on an outer wall surface of the pillar to surround the pillar.

In some embodiments, the wavelength conversion component may further comprise a heat dissipation structure disposed in an inner accommodation space of the pillar.

In some embodiments, a cross section of the pillar perpendicular to the common central axis may be circular.

In some embodiments, a cross section of the pillar perpendicular to the common central axis may be polygonal.

In some embodiments, the outer wall surface of the pillar may comprise a plurality of planes.

Preferably, the plurality of planes may extend in a direction parallel to the common central axis and may be sequentially arranged in a circumferential direction around the common central axis.

In some embodiments, the light filtering component may comprise a disc-shaped substrate.

Preferably, the disc-shaped substrate may be connected to one end of the pillar of the wavelength conversion component.

In some embodiments, the light filtering component may have a first light filtering region, a first light transmitting region and a light penetration region that may be disposed on the disc-shaped substrate.

Preferably, the first light filtering region, the first light transmitting region and the light penetration region may form an annular region around the common central axis.

In some embodiments, the first light transmitting region of the light filtering component may cover a same orientation angle range as the second optical region of the wavelength conversion component with respect to the common central axis.

In some embodiments, the first light transmitting region of the light filtering component may comprise a diffusion structure or component.

Preferably, the diffusion structure or component may be a roughened structure or component.

In some embodiments, the beam splitting and combining module may comprise an optical component and a mirror disposed besides the optical component.

In some embodiments, one of the first optical region and the second optical region may comprise a light reflection region and the other one may comprise a wavelength conversion region.

Preferably, the wavelength conversion region may be provided with at least one wavelength conversion material.

Preferably, when the light reflection region is cut into the transmission path of the exciting beam, the light reflection region may reflect the exciting beam, and when the wavelength conversion region is cut into the transmission path of the exciting beam, the at least one wavelength conversion material may be excited by the exciting beam to emit a converted beam.

In some embodiments, the light reflection region may have a reflective coating that has been roughened.

In some embodiments, the beam splitting and combining module may comprise an optical component and a mirror disposed besides the optical component.

In some embodiments, the optical component may comprise a first light functional portion and a second light functional portion.

Preferably, the first light functional portion may be adapted to allow the exciting beam to pass through.

Preferably, the second light functional portion may be adapted to reflect a portion of the exciting beam and to allow a portion of the exciting beam to pass through.

Preferably, the optical component may be adapted to reflect the converted beam.

In some embodiments, when the light reflection region is cut into the transmission path of the exciting beam, the light reflection region may reflect the exciting beam to the second light functional portion of the optical component.

Preferably, the exciting beam may be reflected by the second light functional portion to form a first portion transmitted to the light filtering component, the exciting beam may pass through the second light functional portion to form a second portion, and the second portion of the exciting beam, after being transmitted to the mirror, is then reflected by the mirror to be transmitted to the light filtering component.

Preferably, an area ratio of the second light functional portion to the optical component may be 1/2 to 1/3.

Preferably, one of the first optical region and the second optical region may comprise a first wavelength conversion region and the other one may comprise a second wavelength conversion region.

Preferably, the first wavelength conversion region may be provided with at least one first wavelength conversion material and the second wavelength conversion region may be provided with at least one second wavelength conversion material.

Preferably, when the first wavelength conversion region is cut into the transmission path of the exciting beam, the at least one first wavelength conversion material may be excited by the exciting beam to emit a first converted beam, and when the second wavelength conversion region is cut into the transmission path of the exciting beam, the at least one second wavelength conversion material may be excited by the exciting beam to emit a second converted beam.

Preferably, the beam splitting and combining module may comprise a wavelength selection component.

Preferably, the wavelength selection component may be adapted to allow the exciting beam to pass through and to reflect the first converted beam and the second converted beam, so that the exciting beam from the exciting light source module is transmitted to the wavelength conversion component, and the first converted beam and the second converted beam from the wavelength conversion component are transmitted to the light filtering component.

In order to achieve one, a part of, or all of the aforementioned objectives or other objectives, an embodiment of the disclosure provides a projection apparatus that includes the aforementioned illumination system, a light valve and a projection lens. The illumination system is adapted to emit an illumination beam. The light valve is disposed on a transmission path of the illumination beam so as to modulate the illumination beam into an image beam. The projection lens is disposed on a transmission path of the image beam.

Preferably, the wavelength conversion component comprises a pillar, and the first optical region and the second optical region are disposed on an outer wall surface of the pillar to surround the pillar.

Preferably, the wavelength conversion component further comprises a heat dissipation structure disposed in an inner accommodation space of the pillar.

Preferably, the outer wall surface of the pillar comprises a plurality of planes, and the plurality of planes extend in a direction parallel to the common central axis and are sequentially arranged in a circumferential direction around the common central axis.

Preferably, the light filtering component comprises a disc-shaped substrate, and the disc-shaped substrate is connected to one end of the pillar of the wavelength conversion component.

Preferably, the light filtering component has a first light filtering region, a first light transmitting region and a light penetration region that are disposed on the disc-shaped substrate.

Preferably, the first light filtering region, the first light transmitting region and the light penetration region form an annular region around the common central axis.

Preferably, the first light transmitting region of the light filtering component covers a same orientation angle range as the second optical region of the wavelength conversion component with respect to the common central axis.

Preferably, the first light transmitting region of the light filtering component comprises a diffusion structure or component.

Preferably, the diffusion structure or component is a roughened structure or component.

Preferably, the beam splitting and combining module comprises an optical component and a mirror disposed besides the optical component.

Preferably, one of the first optical region and the second optical region comprises a light reflection region and the other one comprises a wavelength conversion region.

Preferably, the wavelength conversion region is provided with at least one wavelength conversion material.

Preferably, when the light reflection region is cut into the transmission path of the exciting beam, the light reflection region reflects the exciting beam, and when the wavelength conversion region is cut into the transmission path of the exciting beam, the at least one wavelength conversion material is excited by the exciting beam to emit a converted beam.

Preferably, the light reflection region has a reflective coating that has been roughened.

Preferably, the beam splitting and combining module comprises an optical component and a mirror disposed besides the optical component.

Preferably, the optical component comprises a first light functional portion and a second light functional portion, the first light functional portion is adapted to allow the exciting beam to pass through, the second light functional portion is adapted to reflect a portion of the exciting beam and to allow a portion of the exciting beam to pass through, and the optical component is adapted to reflect the converted beam.

Preferably, when the light reflection region is cut into the transmission path of the exciting beam, the light reflection region reflects the exciting beam to the second light functional portion of the optical component, wherein the exciting beam is reflected by the second light functional portion to form a first portion transmitted to the light filtering component, the exciting beam passes through the second light functional portion to form a second portion, and the second portion of the exciting beam, after being transmitted to the mirror, is then reflected by the mirror to be transmitted to the light filtering component.

Preferably, an area ratio of the second light functional portion to the optical component is 1/2 to 1/3.

Preferably, one of the first optical region and the second optical region comprises a first wavelength conversion region and the other one comprises a second wavelength conversion region, wherein the first wavelength conversion region is provided with at least one first wavelength conversion material and the second wavelength conversion region is provided with at least one second wavelength conversion material, when the first wavelength conversion region is cut into the transmission path of the exciting beam, the at least one first wavelength conversion material is excited by the exciting beam to emit a first converted beam, and when the second wavelength conversion region is cut into the transmission path of the exciting beam, the at least one second wavelength conversion material is excited by the exciting beam to emit a second converted beam.

Preferably, the beam splitting and combining module comprises a wavelength selection component, wherein the wavelength selection component is adapted to allow the exciting beam to pass through and to reflect the first converted beam and the second converted beam, so that the exciting beam from the exciting light source module is transmitted to the wavelength conversion component, and the first converted beam and the second converted beam from the wavelength conversion component are transmitted to the light filtering component.

Based on the foregoing, in the illumination system and the projection apparatus of the embodiments of the disclosure, the light filtering component is combined with the wavelength conversion component by the common central axis, so that the wavelength conversion component and the light filtering component are adapted to rotate coaxially. In other words, since the wavelength conversion component and the light filtering component are integrated into one single member, the wavelength conversion component and the light filtering component may share the same rotating mechanism. As a result, it is not necessary to come up with an additional synchronization design. In this way, the illumination system and the projection apparatus in the embodiments of the disclosure may have simpler structures and lower cost.

Other objectives, features and advantages of the invention will be further understood from the further technological features disclosed by the embodiments of the invention wherein there are shown and described preferred embodiments of this invention, simply by way of illustration of modes best suited to carry out the invention.

To make the aforementioned and other features and advantages of the disclosure more comprehensible, several embodiments accompanied with drawings are described in detail as follows.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG.1A is a diagram illustrating light paths of a projection apparatus at a first time frame according to an embodiment of the disclosure.
FIG.1B is a diagram illustrating light paths of the projection apparatus of FIG.1A at a second time frame.
FIG.1C is a diagram illustrating light paths of a projection apparatus at a first time frame according to another embodiment of the disclosure.
FIG.1D is a diagram illustrating light paths of the projection apparatus of FIG. 1C at a second time frame.
FIG.2 is a schematic cross-sectional view of the wavelength conversion component in FIG.1A and FIG.1B.
FIG.3 is a schematic front view of the light filtering component in FIG.1A and FIG.1B.
FIG.4A is a schematic cross-sectional view of a wavelength conversion component according to another embodiment of the disclosure.
FIG.4B is a schematic cross-sectional view of a wavelength conversion component according to another embodiment of the disclosure.
FIG.5A is a diagram illustrating light paths of a projection apparatus at a first time frame according to another embodiment of the disclosure.
FIG.5B is a diagram illustrating light paths of the projection apparatus of FIG.5A at a second time frame.
FIG.6 is a schematic cross-sectional view of the wavelength conversion component in FIG.5A and FIG.5B.
FIG.7 is a schematic front view of the light filtering component in FIG.5A and FIG.5B.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

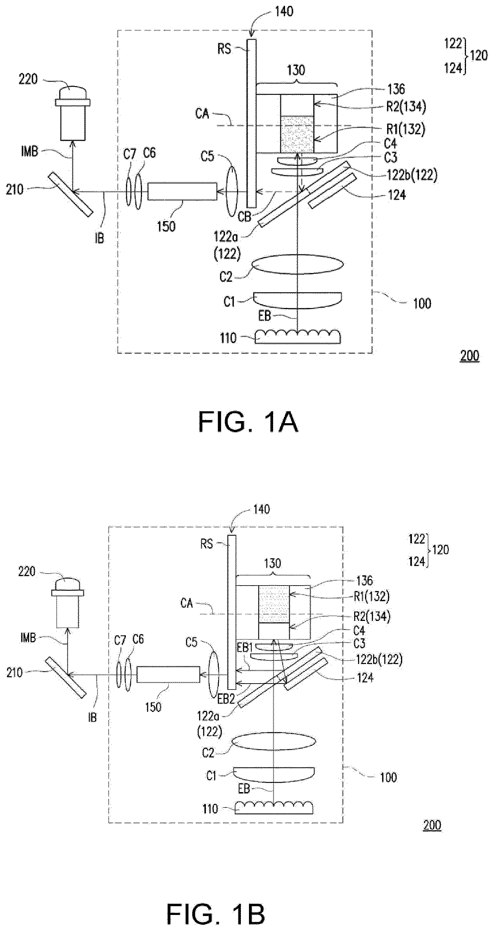

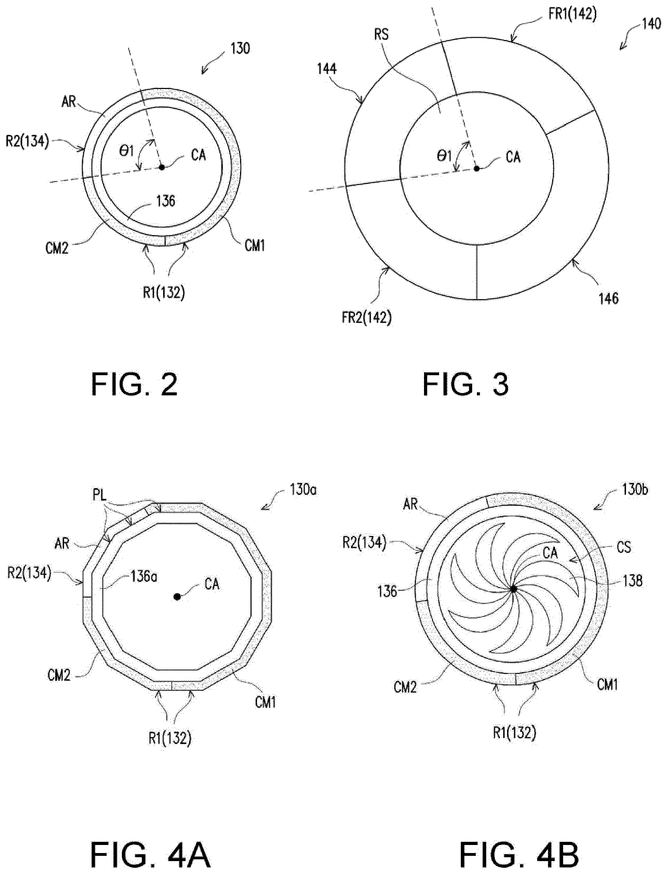

FIG.1A is a diagram illustrating light paths of a projection apparatus at a first time frame according to an embodiment of the disclosure. FIG.1B is a diagram illustrating light paths of the projection apparatus of FIG. 1A at a second time frame. FIG.2 is a schematic cross-sectional view of the wavelength conversion component in FIG.1A and FIG.1B. FIG.3 is a schematic front view of the light filtering component in FIG.1A and FIG.1B. It should be noted that the cross section shown in FIG.2 is perpendicular to a common central axis. The front view direction shown in FIG.3 is, for example, the left-to-right direction of the drawing of FIG.1A. The cross-sectional direction shown in FIG.2 is the same as the front view direction shown in FIG.3.

With reference to FIG.1A and FIG.1B, in this embodiment, a projection apparatus 200 includes an illumination system 100, a light valve 210, and a projection lens 220. The illumination system 100 is adapted to emit an illumination beam IB. The light valve 210 is disposed on the transmission path of the illumination beam IB so as to modulate the illumination beam IB into an image beam IMB. The projection lens 220 is disposed on the transmission path of the image beam IMB, and is adapted to project the image beam 1MB onto a screen or a wall (not shown) to form images. After the illumination beams IB of different colors irradiates the light valve 210, the light valve 210 converts the illumination beams IB of different colors into the image beam 1MB according to a timing sequence and transmits the image beam 1MB to the projection lens 220. Consequently, the images that are formed by the image beam 1MB converted by the light valve 210 and are projected by the projection apparatus 200 may become color images.

In this embodiment, the light valve 210 is, for example, a digital micro-mirror device (DMD) or a liquid-crystal-on-silicon panel (LCOS panel). However, in other embodiments, the light valve 210 may also be a transmissive liquid crystal panel or other spatial light modulators. In this embodiment, the projection lens 220 is, for example, a combination of one or more optical lenses having refractive power. The optical lenses, for example, include non-planar lenses such as a biconcave lens, a biconvex lens, a concave-convex lens, a convex-concave lens, a plane-convex lens and a plane-concave lens, or various combinations thereof. The disclosure is not intended to limit the type and kind of the projection lens 220.

With reference to FIG.1A, FIG.IB, FIG.2 and FIG.3, the illumination system 100 includes an exciting light source module 110, a beam splitting and combining module 120, a wavelength conversion component 130 and a light filtering component 140. The exciting light source module 110 is adapted to emit an exciting beam EB. The beam splitting and combining module 120 is disposed on the transmission path of the exciting beam EB. The wavelength conversion component 130 has a first optical region 132 and a second optical region 134, and the first optical region 132 and the second optical region 134 are sequentially cut into the transmission path of the exciting beam EB transmitted by the beam splitting and combining module 120. The light filtering component 140 is combined with the wavelength conversion component 130 by a common central axis CA, so that the wavelength conversion component 130 and the light filtering component 140 are adapted to rotate coaxially and synchronously. Specifically, the wavelength conversion component 130 includes a pillar 136, and the first optical region 132 and the second optical region 134 are disposed on an outer wall surface of the pillar 136 to surround the pillar 136. The light filtering component 140 includes a disc-shaped substrate RS, and the disc-shaped substrate RS is connected to one end of the pillar 136 of the wavelength conversion component 130.

In the embodiment of the disclosure, since the wavelength conversion component 130 and the light filtering component 140 are integrated (fixed) into one single member, the wavelength conversion component 130 and the light filtering component 140 may share the same rotating mechanism (such as a motor). As a result, it is not necessary to come up with an additional synchronization design and is not necessary to add additional motors and corresponding required mechanisms. In this way, the illumination system 100 and the projection apparatus 200 in the embodiment of the disclosure may have simpler structures and lower cost.

In the embodiment of the disclosure, the exciting light source module 110 is generally referred to as a light source capable of emitting a short-wavelength beam. The peak wavelength of the short-wavelength beam, for example, falls within a wavelength range of blue light or a wavelength range of ultraviolet light. Herein the peak wavelength is defined as the wavelength corresponding to the maximum light intensity. The exciting light source module 110 includes a laser diode (LD), a light emitting diode (LED), or a bank or an array formed by one of the two. However, the disclosure is not limited thereto. In this embodiment, the exciting light source module 110 is a laser light emitting component including a laser diode. For example, the exciting light source module 110 may be a blue laser diode bank, and the exciting beam EB may be a blue laser beam. However, the disclosure is not limited thereto.

With reference to FIG.2, one of the first optical region 132 and the second optical region 134 of the wavelength conversion component 130 includes a wavelength conversion region R1, and the other one includes a light reflection region R2. In this embodiment, the first optical region 132 is, for example, the wavelength conversion region R1, and the second optical region 134 is, for example, the light reflection region R2. The wavelength conversion region R1 is provided with at least one wavelength conversion material (two wavelength conversion materials CM1 and CM2 are used as examples in FIG.2, wherein the wavelength conversion material CM1 is, for example, a yellow phosphor and the wavelength conversion material CM2 is, for example, a green phosphor, but they are not limited thereto. The yellow phosphor is defined as a phosphor that may generate yellow light, and so on and so forth) for converting the exciting beam EB into a converted beam CB. The light reflection region R2 has a reflective coating AR that has been roughened, for example. In this embodiment, the pillar 136 of the wavelength conversion component 130 is, for example, a reflective pillar. In other embodiments, the light reflection region R2 is, for example, a reflecting surface, wherein the pillar 136 has an outer wall surface of metal material, for example.

With reference to FIG.3, the light filtering component 140 has a first light filtering region 142, a first light transmitting region 144 and a light penetration region 146 that are disposed on the disc-shaped substrate RS, and the first light filtering region 142, the first light transmitting region 144 and the light penetration region 146 form an annular region around the common central axis CA. The light filtering component 140 is adapted to filter out (reflect or absorb) light beams other than the light beams of a specific wavelength range and to allow the light beams of the specific wavelength range to pass through, so that the color purity of the color light is enhanced to form the illumination beam IB. In this embodiment, the first light filtering region 142 may include a plurality of sub-light filtering regions respectively provided with different filtering materials. The first light filtering region 142, for example, includes a sub-light filtering region FR1 and a sub-light filtering region FR2. The first light filtering region 142 is, for example, a dichroic mirror (DM) having a color separation function. The sub-light filtering region FR1 is, for example, a red light filtering region, the sub-light filtering region FR2 is, for example, a green light filtering region, and the first light transmitting region 144 is, for example, a light transmitting region provided with a diffusion plate, a diffusion particle, or a diffusion structure. However, the disclosure is not limited thereto. The light penetration region 146 allows the converted beam CB (a yellow beam) transmitted from the wavelength conversion region R1 of the wavelength conversion component 130 to pass through. The light penetration region 146 is made of a light transmissive material such as glass. For example, a red light filtering region may allow light beams having a red light wavelength range to pass through, and may filter out (reflect or absorb) light beams having other wavelength ranges, and so on and so forth. Specifically, when the converted beam CB is transmitted to the red light filtering region or the green light filtering region, the converted beam CB is filtered to form a red beam or a green beam. When the exciting beam EB is transmitted to the first light transmitting region 144, the exciting beam EB passes through the first light transmitting region 144 as a blue beam, for example.

It should be noted that at least one of the light reflection region R2 of the wavelength conversion component 130 and the first light transmitting region 144 of the light filtering component 140 needs to be provided with a diffusion structure or component for solving the issue of laser speckle. For example, the diffusion structure or component may be a roughened structure or component, In other embodiments, when the light reflection region R2 of the wavelength conversion component 130 and the first light transmitting region 144 of the light filtering component 140 are each provided with diffusion structures or components, the two diffusion structures or components may respectively have different degrees of diffusion. The degree of diffusion is, for example, the configuration density of the scattering structures or the distribution density of the scattering particles.

With reference to FIG.2 and FIG.3 simultaneously, the first light filtering region 142 and the light penetration region 146 of the light filtering component 140 cover the same orientation angle range as the first optical region 132 of the wavelength conversion component 130 with respect to the common central axis CA. The first light transmitting region 144 of the light filtering component 140 covers the same orientation angle range as the second optical region 134 of the wavelength conversion component 130 with respect to the common central axis CA. For example, as shown in FIG.2 and FIG.3, an orientation angle range θ1 covered by the second optical region 134 of the wavelength conversion component 130 with respect to the common central axis CA is, for example, from 48 degrees to 85 degrees, and the corresponding first light transmitting region 144 of the light filtering component 140 also covers the orientation angle range θ1 from 48 degrees to 85 degrees with respect to the common central axis CA, and so on and so forth. However, the orientation angle range θ1 covered by these two regions are not limited thereto. Besides, the sub-light filtering region FR1 (e.g., a red light filtering region) and the light penetration region 146 of the light filtering component 140 cover the same orientation angle range as a region of the wavelength conversion component 130 in which the wavelength conversion material CM1 (e.g., a yellow phosphor) is disposed with respect to the common central axis CA. The sub-light filtering region FR2 (e.g., a green light filtering region) of the light filtering component 140 covers the same orientation angle range as a region of the wavelength conversion component 130 in which the wavelength conversion material CM2 (e.g., a green phosphor) is disposed with respect to the common central axis CA. Furthermore, since the wavelength conversion component 130 and the light filtering component 140 are combined into the same member, as long as respective regions of the wavelength conversion component 130 and the light filtering component 140 correspond to each other through appropriate region-by-region angular design, the problem of color aberration may then be avoided.

It should be noted that the numbers, materials and types of the respective regions of the wavelength conversion component 130 and the light filtering component 140 are merely illustrative, and are not intended to limit the disclosure. For example, the wavelength conversion region R1 of the wavelength conversion component 130 may also have one, three or more different wavelength converting substances. The first light filtering region 142 of the light filtering component 140 may also have other numbers of sub-light filtering regions, or each sub-light filtering region may filter out other kinds of color light. The disclosure is not limited thereto.

With reference to FIG.1A and FIG.1B again, in this embodiment, the beam splitting and combining module 120 includes an optical component 122 and a mirror 124 disposed besides the optical component 122. The optical component 122 includes a first light functional portion 122a and a second light functional portion 122b. Specifically, the first light functional portion 122a of the optical component 122 is, for example, a wavelength selection component, that is, a dichroic mirror (DM). The second light functional portion 122b of the optical component 122 is, for example, provided with a half-mirror. In this embodiment, the first light functional portion 122a and the second light functional portion 122b may form the optical component 122 through glue bonding. However, in other embodiments, in the optical component 122, the first light functional portion 122a is, for example, a dichroic mirror (DM), and the second light functional portion 122b is, for example, formed on the optical component 122 by the configuration of half-mirror plating or coating, and the area ratio of the half-mirror to the optical component 122 is 1/2 to 1/3. However, the disclosure is not limited thereto. The dichroic mirror may provide different optical effects for light beams of different colors and wavelength ranges, and the half-mirror allows 50% of the transmitted light beams to pass through and reflects 50% of the transmitted light beams. For example, in this embodiment, the dichroic mirror, for example, allows the blue exciting beam to pass through and reflects light beams of other colors (such as red, green, yellow and so on). The half-mirror of the second light functional portion 122b, for example, allows a portion of the blue exciting beam to pass through and reflects a portion of the blue exciting beam. In this embodiment, the optical component 122 may be designed to reflect the converted beam CB, the first light functional portion 122a of the optical component 122 may be designed to allow the exciting beam EB to pass through, and the second light functional portion 122b may be designed to reflect a portion of the exciting beam EB and allow a portion of the exciting beam EB to pass through. Besides, a portion of the converted beam CB is transmitted to the second light functional portion 122b, and the second light functional portion 122b may be designed to reflect a portion of the converted beam CB and allow a portion of the converted beam CB to pass through. The portion of the converted beam CB that has been allowed to pass through is partly transmitted to the mirror 124 by the second light functional portion 122b, and is then reflected by the mirror 124 to be transmitted to the light filtering component 140.

As shown in FIG.1A, at the first time frame, the wavelength conversion region R1 is cut into the transmission path of the exciting beam EB passing through the optical component 122. At this time, the wavelength conversion material CM1 (e.g., a yellow phosphor) and the wavelength conversion material CM2 (e.g., a green phosphor) are sequentially excited by the exciting beam EB to emit a converted beam CB, and the converted beam CB is reflected by the pillar 136 of the wavelength conversion component 130 to be transmitted to the optical component 122. Then, the converted beam CB is reflected by the optical component 122 to be transmitted to the light filtering component 140. Herein the wavelength conversion material CM1 (e.g., a yellow phosphor) is excited to emit a light beam adapted to be transmitted to the sub-light filtering region FR1 (e.g., a red light filtering region) and the light penetration region 146 of the light filtering component 140 so as to filter out a red beam and allow a yellow beam to pass through respectively. The wavelength conversion material CM2 (e.g., a green phosphor) is excited to emit a light beam adapted to be transmitted to the sub-light filtering region FR2 (e.g., a green light filtering region) of the light filtering component 140 so as to filter out a green beam.

As shown in FIG.1B, at the second time frame, the light reflection region R2 is cut into the transmission path of the exciting beam EB. At this time, the exciting beam EB is reflected by the light reflection region R2 to be transmitted to the optical component 122. When the reflected exciting beam EB is transmitted to the second light functional portion 122b of the optical component 122, the exciting beam EB is reflected by the second light functional portion 122b to form a first portion EB1 transmitted to the light filtering component 140, the exciting beam EB passes through the second light functional portion 122b to form a second portion EB2, and the second portion EB2 of the exciting beam EB, after being transmitted to the mirror 124, is then reflected by the mirror 124 to be transmitted to the light filtering component 140. Herein the first portion EB1 and the second portion EB2 of the exciting beam EB are adapted to be transmitted to the first light transmitting region 144 of the light filtering component 140 to be output as a blue beam.

It should be noted here that after the exciting beam EB is reflected by the light reflection region R2, FIG.1B only schematically illustrates the portion of the reflected exciting beam EB transmitted to the second light functional portion 122b of the optical component 122.

In this embodiment, the light reflection region R2 has a reflective coating AR that has been roughened, and the reflective coating AR is disposed on the pillar 136. The reflective coating AR may be used to reduce or eliminate the laser speckle phenomenon of the exciting beam EB. In other embodiments, the light reflection region R2 may also have no reflective coating AR, and the exciting beam EB is reflected by the pillar 136 instead.

In light of the foregoing configuration, compared with prior art techniques, the illumination system 100 and the projection apparatus 200 in the embodiment of the disclosure is able to direct the exciting beam EB and the converted beam CB to the light filtering component 140 simply by the corresponding configuration of the beam splitting and combining module 120, the wavelength conversion component 130 and the light filtering component 140 and without the need to dispose a large number of optical components. Therefore, the illumination system 100 and the projection apparatus 200 of this disclosure may have fewer optical components and smaller volume.

In this embodiment, the illumination system 100 further includes a light homogenizing component 150 disposed on the transmission path of the illumination beam IB from the light filtering component 140. The light homogenizing component 150 is, for example, a light integration rod or a lens array (such as a fly-eye lens array), but is not limited thereto. Besides, the illumination system 100 may further include one or more lenses, such as a lens C1 and a lens C2 located between the exciting light source module 110 and the beam splitting and combining module 120, a lens C3 and a lens C4 located between the beam splitting and combining module 120 and the wavelength conversion component 130, a lens C5 located between the light filtering component 140 and the light homogenizing component 150, or a lens C6 and a lens C7 located between the light homogenizing component 150 and the light valve 210, so as to adjust (converge or collimate) the light transmission inside the illumination system 100.

It should be noted that part of the contents of the previous embodiment is used in the following embodiments, and descriptions of the same technical contents are omitted. The contents of the previous embodiment may be referred to for components having the same names, and will not be repeated hereinafter.

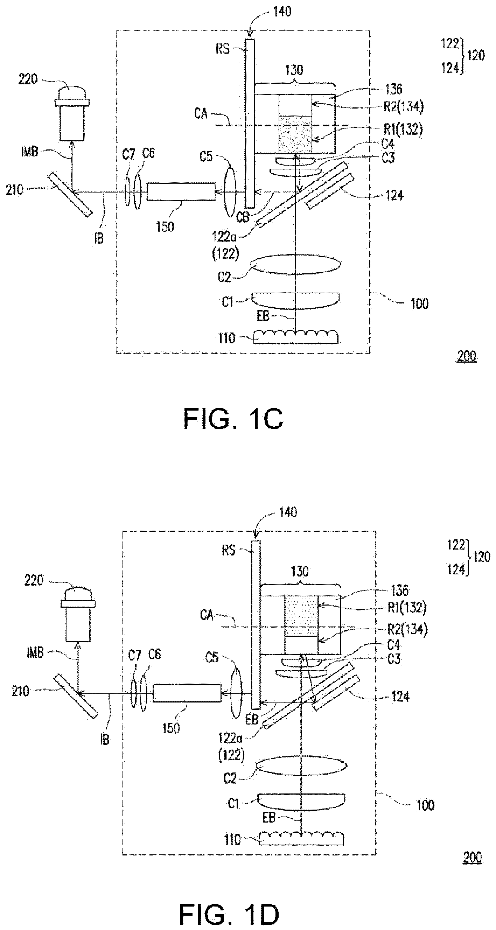

FIG. 1C is a diagram illustrating light paths of a projection apparatus at a first time frame according to another embodiment of the disclosure. FIG.1D is a diagram illustrating light paths of the projection apparatus of FIG. 1C at a second time frame.

With reference to FIG.1C and FIG.1D, a technical difference between this embodiment and that of FIGs. 1A and 1B is as follows: a beam splitting and combining module 120 includes an optical component 122 and a mirror 124 disposed besides the optical component 122, but the optical component 122 only includes a first light functional portion 122a. Specifically, the first light functional portion 122a of the optical component 122 is, for example, a dichroic mirror (DM). The dichroic mirror may provide different optical effects for light beams of different colors and wavelength ranges. For example, in this embodiment, the dichroic mirror may allow the blue exciting beam to pass through and reflect light beams of other colors (such as red, green, yellow and so on). In this embodiment, the optical component 122 may be designed to reflect a converted beam CB, and the first light functional portion 122a of the optical component 122 may be designed to allow an exciting beam EB to pass through.

As shown in FIG.1C, at the first time frame, a wavelength conversion region R1 is cut into the transmission path of the exciting beam EB passing through the optical component 122. At this time, a wavelength conversion material CM1 (e.g., a yellow phosphor) and a wavelength conversion material CM2 (e.g., a green phosphor) are sequentially excited by the exciting beam EB to emit a converted beam CB, and the converted beam CB is reflected by a pillar 136 of a wavelength conversion component 130 to be transmitted to the optical component 122. Then, the converted beam CB is reflected by the optical component 122 to be transmitted to the light filtering component 140. Herein the wavelength conversion material CM1 (e.g., a yellow phosphor) is excited to emit a light beam adapted to be transmitted to the sub-light filtering region FR1 (e.g., a red light filtering region) and the light penetration region 146 of the light filtering component 140 so as to filter out a red beam and allow a yellow beam to pass through respectively. The wavelength conversion material CM2 (e.g., a green phosphor) is excited to emit a light beam adapted to be transmitted to the sub-light filtering region FR2 (e.g., a green light filtering region) of the light filtering component 140 so as to filter out a green beam.

As shown in FIG.1D, at the second time frame, a light reflection region R2 is cut into the transmission path of the exciting beam EB. At this time, the exciting beam EB is reflected by the light reflection region R2 to be transmitted to the optical component 122. When the reflected exciting beam EB is transmitted to the optical component 122, the exciting beam EB passes through the optical component 122 and is transmitted to the mirror 124, and the exciting beam EB is reflected by the mirror 124 to be transmitted to the light filtering component 140. Herein the exciting beam EB is output as a blue beam.

In light of the foregoing configuration, compared with prior art techniques, the illumination system 100 and the projection apparatus 200 in the embodiment of the disclosure is able to direct the exciting beam EB and the converted beam CB to the light filtering component 140 simply by the corresponding configuration of the beam splitting and combining module 120, the wavelength conversion component 130 and the light filtering component 140 and without the need to dispose a large number of optical components. Therefore, the illumination system 100 and the projection apparatus 200 of this disclosure may have fewer optical components and smaller volume.

It should be noted here that part of the contents of the previous embodiment is used in the following embodiments, and descriptions of the same technical contents are omitted. The contents of the previous embodiment may be referred to for components having the same names, and will not be repeated hereinafter.

FIG.4A is a schematic cross-sectional view of a wavelength conversion component according to another embodiment of the disclosure. The cross section shown in FIG.4A is perpendicular to a common central axis CA. With reference to FIG.4A, a wavelength conversion component 130a in this embodiment is substantially similar to the wavelength conversion component 130 of FIG.2. The main difference therebetween is as follows: an outer wall surface of a pillar 136a of the wavelength conversion component 130a includes a plurality of planes PL, and the plurality of planes PL extend in a direction parallel to the common central axis CA and are sequentially arranged in a circumferential direction around the common central axis CA. Therefore, a cross section of the pillar 136a of the wavelength conversion component 130a perpendicular to the common central axis CA is polygonal, whereas a cross section of the pillar 136 of the wavelength conversion component 130 in FIG.2 perpendicular to the common central axis CA is circular. In this embodiment, since the incident surface where the exciting beam EB irradiates the wavelength conversion component 130a is a plane, the energy receiving area of the wavelength conversion component 130a is thus larger than that of the wavelength conversion component 130 having a curved incident surface. As a result, optical conversion efficiency may be improved. However, in other embodiments, a cross section of the pillar 136a of the wavelength conversion component 130a perpendicular to the common central axis CA may also have other shapes. The disclosure is not limited thereto.

FIG.4B is a schematic cross-sectional view of a wavelength conversion component according to another embodiment of the disclosure. The cross section shown in FIG.4B is perpendicular to a common central axis CA. With reference to FIG.4B, a wavelength conversion component 130b in this embodiment is substantially similar to the wavelength conversion component 130 of FIG.2. The main difference therebetween is as follows: the wavelength conversion component 130b further includes a heat dissipation structure 138 disposed in an inner accommodation space CS of a pillar 136. The heat dissipation structure 138 may help the wavelength conversion component 130b to dissipate heat, thereby facilitating the maintenance of the conversion efficiency of a wavelength conversion material CM1 and a wavelength conversion material CM2. In this embodiment, the heat dissipation structure 138 is, for example, a fin or a fan, but is not limited thereto.

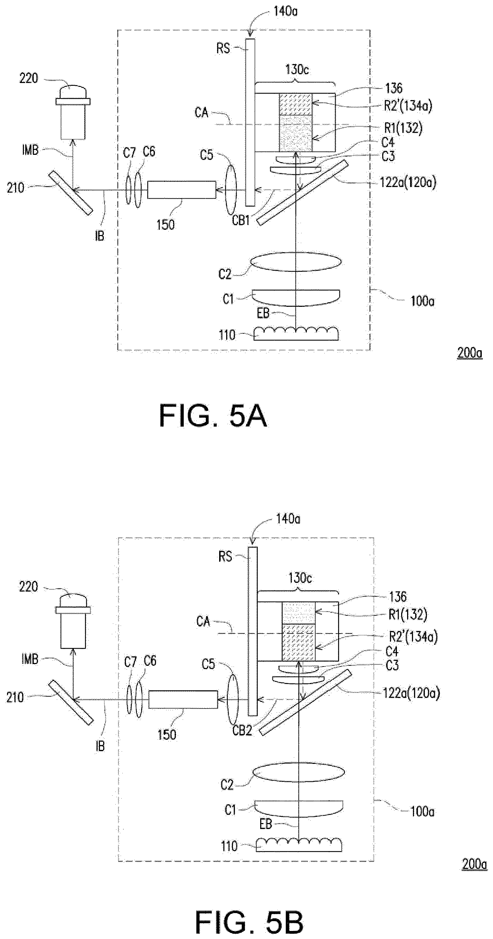

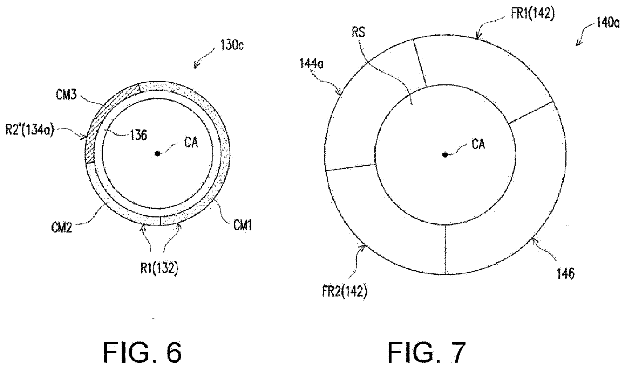

FIG.5A is a diagram illustrating light paths of a projection apparatus at a first time frame according to another embodiment of the disclosure. FIG.5B is a diagram illustrating light paths of the projection apparatus of FIG.5A at a second time frame. FIG.6 is a schematic cross-sectional view of the wavelength conversion component in FIG.5A and FIG.5B. The cross section shown in FIG.6 is perpendicular to a common central axis. FIG.7 is a schematic front view of the light filtering component in FIG.5A and FIG.5B. It should be noted that the cross section shown in FIG.6 is perpendicular to the common central axis. The front view direction shown in FIG.7 is, for example, the left-to-right direction of the drawing of FIG.5A. The cross-sectional direction shown in FIG.6 is the same as the front view direction shown in FIG.7. Besides, in a projection apparatus 200a of this embodiment, the contents of the previous embodiment may be referred to for components having the same names and reference numerals, and will not be repeated hereinafter.

With reference to FIG.6 and FIG.7 first, in an illumination system 100a, one of a first optical region 132 and a second optical region 134a of a wavelength conversion component 130c includes a first wavelength conversion region R1, and the other one includes a second wavelength conversion region R2'. In this embodiment, the first optical region 132 is, for example, the first wavelength conversion region R1, and the second optical region 134a is, for example, the second wavelength conversion region R2'. The first wavelength conversion region R1 is provided with at least one first wavelength conversion material (two wavelength conversion materials CM1 and CM2 are used as examples in FIG.6, wherein the wavelength conversion material CM1 is, for example, a yellow phosphor and the wavelength conversion material CM2 is, for example, a green phosphor) for converting an exciting beam EB into a first converted beam CB1. The second wavelength conversion region R2' is provided with at least one second wavelength conversion material (one wavelength conversion material CM3 is used as an example in FIG.6, wherein the wavelength conversion material CM3 is, for example, a cyan phosphor) for converting the exciting beam EB into a second converted beam CB2.

A sub-light filtering region FR1 of a first light filtering region 142 of a light filtering component 140 is, for example, a red light filtering region. A sub-light filtering region FR2 is, for example, a green light filtering region. A light penetration region 146, for example, allows a yellow light to pass through. A first light transmitting region 144a is, for example, a blue light filtering region. However, the disclosure is not limited thereto. Specifically, when the first converted beam CB1 is transmitted to the red light filtering region, the light penetration region or the green light filtering region, the first converted beam CB1 is filtered to form a red beam, a yellow beam or a green beam. When the second converted beam CB2 is transmitted to the blue light filtering region, the second converted beam CB2 is filtered to form a blue beam. It should be noted that the main wavelength of the second converted beam CB2 generated by the wavelength conversion material CM3 (a cyan phosphor) is greater than the main wavelength of the exciting beam EB.

With reference to FIG.5A and FIG.5B, in this embodiment, a beam splitting and combining module 120a includes a wavelength selection component 122a. Specifically, the wavelength selection component 122a is, for example, a dichroic mirror (DM), and may provide different optical effects for light beams of different colors. In this embodiment, the wavelength selection component 122a may be designed to allow the exciting beam EB to pass through to reflect the first converted beam CB1 and the second converted beam CB2, so that the exciting beam EB from an exciting light source module 110 is transmitted to the wavelength conversion component 130c, and the first converted beam CB1 and the second converted beam CB2 from the wavelength conversion component 130c are transmitted to a light filtering component 140a.

As shown in FIG.5A, at the first time frame, the first wavelength conversion region R1 is cut into the transmission path of the exciting beam EB. At this time, the wavelength conversion material CM1 (e.g., a yellow phosphor) and the wavelength conversion material CM2 (e.g., a green phosphor) are sequentially excited by the exciting beam EB to emit the first converted beam CB1, and the first converted beam CB1 is reflected by a pillar 136 of the wavelength conversion component 130c to be transmitted to the wavelength selection component 122a. Then, the first converted beam CB1 is reflected by the wavelength selection component 122a to be transmitted to the light filtering component 140a. Herein the wavelength conversion material CM1 (e.g., a yellow phosphor) is excited to emit a light beam adapted to be transmitted to the sub-light filtering region FR1 (e.g., a red light filtering region) and the light penetration region 146 (e.g., a yellow light penetration region) of the light filtering component 140a so as to filter out a red beam and a yellow beam respectively. The wavelength conversion material CM2 (e.g., a green phosphor) is excited to emit a light beam adapted to be transmitted to the sub-light filtering region FR2 (e.g., a green light filtering region) of the light filtering component 140a so as to filter out a green beam.

As shown in FIG.5B, at the second time frame, the second wavelength conversion region R2' is cut into the transmission path of the exciting beam EB. The wavelength conversion material (e.g., a cyan phosphor) is excited by the exciting beam EB to emit the second converted beam CB2, and the second converted beam CB2 is reflected by the pillar 136 of the wavelength conversion component 130c to be transmitted to the wavelength selection component 122a. Then, the second converted beam CB2 is reflected by the wavelength selection component 122a to be transmitted to the light filtering component 140a. Herein the second converted beam CB2 is adapted to be transmitted to the first light transmitting region 144a (e.g., a blue light filtering region) of the light filtering component 140a so as to filter out a blue beam. In this embodiment, the first light transmitting region 144a has a filtering function to filter out the blue beam and to reflect or absorb the wavelengths of other light beams.

In summary, in the illumination system and the projection apparatus of the embodiments of the disclosure, the light filtering component is combined with the wavelength conversion component by a common central axis, so that the wavelength conversion component and the light filtering component are adapted to rotate coaxially. In other words, since the wavelength conversion component and the light filtering component are integrated into one single member, the wavelength conversion component and the light filtering component may share the same rotating mechanism. As a result, it is not necessary to come up with an additional synchronization design. Therefore, the illumination system and the projection apparatus in the embodiments of the disclosure may have simpler structures and lower cost. Besides, the exciting beam EB and the converted beam CB may be directed to the light filtering component simply by the corresponding configuration of the beam splitting and combining module, the wavelength conversion component and the light filtering component, and without the need to dispose a large number of optical components. Therefore, the illumination system and the projection apparatus in the embodiments of the disclosure may have fewer optical components and smaller volume.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims. Moreover, no element and component in the disclosure is intended to be dedicated to the public regardless of whether the element or component is explicitly claimed in the following claims.

## Claims

1. An illumination system, comprising:
an exciting light source module (110), adapted to emit an exciting beam (EB);
a beam splitting and combining module (120), disposed on a transmission path of the exciting beam (EB);
a wavelength conversion component (130), having a first optical region (132) and a second optical region (134), wherein the first optical region (132) and the second optical region (134) are sequentially cut into the transmission path of the exciting beam (EB) transmitted by the beam splitting and combining module (120); and
a light filtering component (140), combined with the wavelength conversion component (130) by a common central axis (CA), so that the wavelength conversion component (130) and the light filtering component (140) are adapted to rotate coaxially.

2. The illumination system as claimed in claim 1, wherein the wavelength conversion component (130) comprises a pillar (136), and the first optical region (132) and the second optical region (134) are disposed on an outer wall surface of the pillar (136) to surround the pillar (136) and/or the wavelength conversion component (130) further comprises a heat dissipation structure (138) disposed in an inner accommodation space of the pillar.

3. The illumination system as claimed in claim 2, wherein a cross section of the pillar (136) perpendicular to the common central axis (CA) is circular or polygonal.

4. The illumination system as claimed in any one of claims 2 or 3, wherein the outer wall surface of the pillar (136) comprises a plurality of planes (PL), and the plurality of planes (PL) extend in a direction parallel to the common central axis (CA) and are sequentially arranged in a circumferential direction around the common central axis (CA).

5. The illumination system as claimed in any one of the claims 1-4, wherein the light filtering component (140) comprises a disc-shaped substrate, and/or the disc-shaped substrate is connected to one end of the pillar of the wavelength conversion component (130).

6. The illumination system as claimed in claim 5, wherein the light filtering component (140) has a first light filtering region (142), a first light transmitting region (144) and a light penetration region (146) that are disposed on the disc-shaped substrate, and the first light filtering region (142), the first light transmitting region (144) and the light penetration region (146) form an annular region around the common central axis (CA).

7. The illumination system as claimed in claim 6, wherein the first light transmitting region (144) of the light filtering component (140) covers a same orientation angle range as the second optical region (134) of the wavelength conversion component (130) with respect to the common central axis (CA) and/or the first light transmitting region (144) of the light filtering component (140) comprises a diffusion structure or component and/or the diffusion structure or component is a roughened structure or component.

8. The illumination system as claimed in any one of the preceding claims, wherein one of the first optical region (132) and the second optical region (134) comprises a light reflection region (R2) and the other one comprises a wavelength conversion region (R1), and the wavelength conversion region (R1) is provided with at least one wavelength conversion material, wherein when the light reflection region (R2) is cut into the transmission path of the exciting beam (EB), the light reflection region (R2) reflects the exciting beam (EB), and when the wavelength conversion region (R1) is cut into the transmission path of the exciting beam (EB), the at least one wavelength conversion material is excited by the exciting beam (EB) to emit a converted beam (CB) and/or the light reflection region (R2) has a reflective coating (AR) that has been roughened.

9. The illumination system as claimed in any one of the preceding claims, wherein the beam splitting and combining module (120) comprises an optical component (122) and a mirror (124) disposed besides the optical component (122).

10. The illumination system as claimed in claim 9, wherein the optical component (122) comprises a first light functional portion (122a) and a second light functional portion (122b), the first light functional portion (122a) is adapted to allow the exciting beam (EB) to pass through, the second light functional portion (122b) is adapted to reflect a portion of the exciting beam (EB) and to allow a portion of the exciting beam (EB) to pass through, and the optical component (122) is adapted to reflect the converted beam (CB).

11. The illumination system as claimed in claim 10, wherein when the light reflection region (R2) is cut into the transmission path of the exciting beam (EB), the light reflection region (R2) reflects the exciting beam (EB) to the second light functional portion (122b) of the optical component (122), wherein the exciting beam (EB) is reflected by the second light functional portion (122b) to form a first portion (EB1) transmitted to the light filtering component (140), the exciting beam (EB) passes through the second light functional portion (122b) to form a second portion (EB2), and the second portion (EB2) of the exciting beam (EB), after being transmitted to the mirror (124), is then reflected by the mirror (124) to be transmitted to the light filtering component (140).

12. The illumination system as claimed in claim 10 or 11, wherein an area ratio of the second light functional portion (122b) to the optical component (122) is 1/2 to 1/3.

13. The illumination system as claimed in any one of the preceding claims, wherein one of the first optical region (132) and the second optical region (134) comprises a first wavelength conversion region (R1) and the other one comprises a second wavelength conversion region (R2'), wherein the first wavelength conversion region (R1) is provided with at least one first wavelength conversion material and the second wavelength conversion region (R2') is provided with at least one second wavelength conversion material, when the first wavelength conversion region (R1) is cut into the transmission path of the exciting beam (EB), the at least one first wavelength conversion material is excited by the exciting beam (EB) to emit a first converted beam (CB1), and when the second wavelength conversion region (R2') is cut into the transmission path of the exciting beam (EB), the at least one second wavelength conversion material is excited by the exciting beam (EB) to emit a second converted beam (CB2).

14. The illumination system as claimed in claim 13, wherein the beam splitting and combining module (120a) comprises a wavelength selection component (122a), wherein the wavelength selection component (122a) is adapted to allow the exciting beam (EB) to pass through and to reflect the first converted beam (CB1) and the second converted beam (CB2), so that the exciting beam (EB) from the exciting light source module (110) is transmitted to the wavelength conversion component (122a), and the first converted beam (CB1) and the second converted beam (CB2) from the wavelength conversion component (122a) are transmitted to the light filtering component (140).

15. A projection apparatus, wherein the projection apparatus comprises an illumination system (100) as claimed in any one of the preceding claims, a light valve (210) and a projection lens (220), wherein the light valve (210) is disposed on a transmission path of an illumination beam (IB) so as to modulate the illumination beam (IB) into an image beam (IMB); and the projection lens (220) is located on a transmission path of the image beam (IMB).
